# EUROPEAN PATENT APPLICATION

(11) **EP 4 641 735 A1**
(43) Date of publication of application: **29.10.2025**
(21) Application number: 23912929.9
(22) Date of filing: 27.12.2023
(51) Int. Cl.: H01M 10/0567, H01M 4/525, H01M 4/505, H01M 10/052

(54) **ACID OR MOISTURE REDUCING AGENT FOR NON-AQUEOUS ELECTROLYTE, NON-AQUEOUS ELECTROLYTE COMPRISING SAME, LITHIUM SECONDARY BATTERY CONTAINING NON-AQUEOUS ELECTROLYTE, AND METHOD FOR REDUCING ACID OR MOISTURE IN NON-AQUEOUS ELECTROLYTE**

(30) Priority: 27.12.2022 JP 2022210485
(71) Applicant: LG Energy Solution, Ltd., Seoul 07335 (KR)
(72) Inventor: IGARASHI, Yoshiyuki, Yokohama-shi, Kanagawa 220--0011 (JP)
(74) Representative: Hoffmann Eitle
(86) International application number: PCT/KR2023/021731
(87) International publication number: WO 2024/144255

(57) **Abstract**

There is provided a non-aqueous electrolyte solution that reduces acid and/or moisture to decrease gas generation under high temperature conditions in order to suppress degradation in battery characteristics. An acid or moisture reducing agent for the non-aqueous electrolyte solution of the present disclosure includes a diisocyanate compound represented by Formula (1), (2) or (3), wherein the non-aqueous electrolyte solution includes a fluorine atom-containing cyclic carbonate:

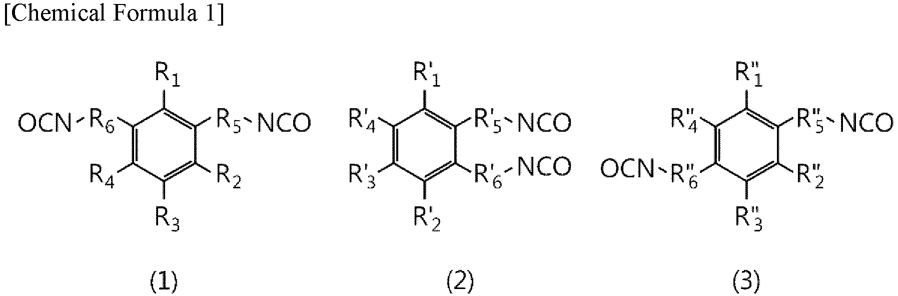

## Description

### TECHNICAL FIELD

The present disclosure relates to an acid or moisture reducing agent for a non-aqueous electrolyte solution, a non-aqueous electrolyte solution containing the same, a lithium secondary battery including a non-aqueous electrolyte solution, and a method for reducing an acid or moisture reducing agent in a non-aqueous electrolyte solution.

The present application claims priority to Japanese Patent Application No. 2022-210485 filed on December 27, 2022, the disclosure of which is incorporated herein by reference.

### BACKGROUND

Due to having high energy density and the outstanding charge and discharge cycling characteristics, lithium secondary batteries are widely used as accumulators in portable devices such as mobile phones or laptop computers as well as automotive and industrial applications, and are expanding the application to new industrial sectors, for example, drones.

Lithium cobalt oxide (LCO) has been used as a positive electrode material of lithium secondary batteries, but recently, materials having a higher mix ratio of nickel are being increasingly used. The materials having a higher mix ratio of nickel are advantageous from the perspective of not only high energy density but also cost competitiveness because it is possible to reduce the use of cobalt.

Additionally, technologies using silicon-containing materials as a negative electrode active material have been developed. Due to high theoretical capacity, the silicon-containing materials are expected to be used, especially in vehicle applications requiring high capacity.

There have been studies on optimal electrolyte solutions when the positive electrode active material and the negative electrode active material are used as described above. The electrolyte solution undergoes reductive decomposition at the negative electrode, and the decomposition product accumulates on the negative electrode surface. Additionally, a film originating from the electrolyte solution components, also known as a Solid Electrolyte Interphase (SEI) layer, is formed on the negative electrode surface. To effectively form the SEI layer in order to improve the life of the battery, electrolyte solutions including a fluorine atom-containing cyclic carbonate have been developed.

However, when the electrolyte solution including the fluorine atom-containing cyclic carbonate is used, a large amount of gas is produced in the battery by decomposition reaction of the fluorine atom-containing cyclic carbonate. For example, it is known that when fluoro ethylene carbonate (FEC) is used, carbon dioxide is produced by oxidative decomposition of FEC on the positive electrode.

Additionally, it is known that an electrolyte degrades by the influence of moisture included in a small amount among materials included in the electrolyte solution. For example, when LiPF₆ is used as the electrolyte, the following reaction occurs, and decomposition of the electrolyte produces acid contents.

LiPF₆ + H₂O→LiF + POF₃ + 2HF

It is known that the acidic species reacts with the surface of the negative electrode material containing silicon or the film on the surface, causing a rise in impedance and degradation of battery characteristics. Additionally, when a material containing nickel is used as the positive electrode active material, a large amount of alkali remains in the material, which may accelerate the reaction that produces acidic species. For example, when fluoro ethylene carbonate (FEC) is used, FEC decomposes into vinyl carbonate (VC) and hydrofluoric acid (HF). When FEC is consumed by this reaction, the film forming capability of the negative electrode containing silicon decreases, and battery characteristics degrade faster. Accordingly, even though the non-aqueous electrolyte solution includes the cyclic carbonate having the fluorine atom, the nickel-containing material is used in the positive electrode and the silicon-containing material is used in the negative electrode, reducing acid and/or moisture brings expectations for development of electrolyte solutions having the outstanding characteristics, capable of suppressing gas generation in the battery under high temperature conditions, thereby suppressing degradation in battery characteristics.

Patent Literature 1 discloses wherein when an isocyanate group-containing compound is added to a nonaqueous solvent, reductive decomposition reaction of the nonaqueous solvent during charging is suppressed. However, Patent Literature 1 does not disclose the influence of the isocyanate group-containing compound on acid and moisture, and in particular, does not disclose the influence on acid and moisture when the electrolyte solution containing the cyclic carbonate having the fluorine atom is used.

Patent Literature 2 discloses wherein an isocyanate compound is added to a nonaqueous solvent, thereby suppressing the reductive decomposition reaction of the electrolyte solution, and suppressing the decline of surface activation or modification of the active material due to the reaction between the isocyanate group and Si surface. However, Patent Literature 2 does not disclose the influence of the isocyanate compound on acid and moisture.

Patent Literature 3 discloses wherein a compound having an isocyanate group is added to a non-aqueous electrolyte solution to reduce acid or moisture in order to improve battery characteristics. However, in the development of active materials of and solvents of the non-aqueous electrolyte solution of the battery, the structure of the isocyanate compound as an optimal additive for these materials is still challenging.

### [RELATED ART DOCUMENT]

### [Patent Literature]

Patent Literature 1: Japanese Patent Publication No. 2002-008719
Patent Literature 2: Japanese Patent Publication No. 2022-103379
Patent Literature 3: Japanese Patent Publication No. 2022-102227

### SUMMARY

### Technical Problem

Therefore, when a non-aqueous electrolyte solution including a fluorine atom-containing cyclic carbonate is used, there is a need for an acid and/or moisture reducing agent for stabilizing the characteristics of the electrolyte solution, and an electrolyte solution having the outstanding battery characteristics by reducing acid and/or moisture.

The present disclosure is designed to solve the above-described problems of the related art, and therefore the present disclosure is directed to providing an acid or moisture reducing agent for a non-aqueous electrolyte solution for reducing gas generation under high temperature conditions to suppress degradation in battery characteristics.

### Technical Solution

After the persistent effort to address the problem, the inventors surprisingly found that in a secondary battery using a non-aqueous electrolyte solution including a fluorine atom-containing cyclic carbonate, the use of an isocyanate compound having a specific chemical structure as an acid or moisture reducing agent for the non-aqueous electrolyte solution reduces gas generation under high temperature conditions, thereby suppressing degradation in battery characteristics and eventually arrived at the present disclosure.

The objective of the present disclosure is achieved by an acid or moisture reducing agent for a non-aqueous electrolyte solution, including a diisocyanate compound represented by Formula (1), (2) or (3): 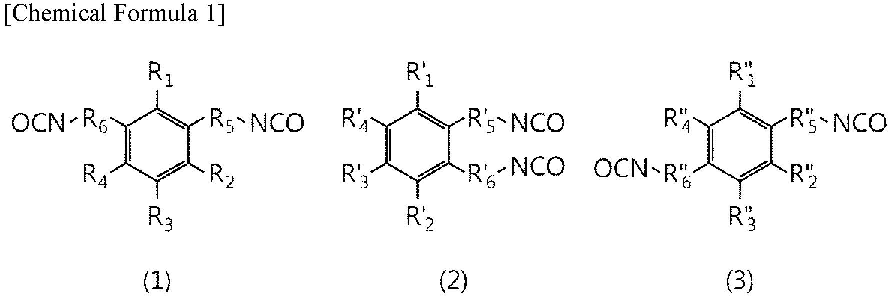
wherein in the Formula (1), each of R₁ to R₄ is independently, hydrogen, an alkyl group having 1 to 4 carbon atoms or a halogen atom, and each of R₅ and R₆ is independently, a bond or an alkylene group having 1 to 4 carbon atoms;
wherein in the Formula (2), each of R'₁ to R'₄ is independently, hydrogen, an alkyl group having 1 to 4 carbon atoms or a halogen atom, and each of R'₅ and R'₆ is independently, a bond or an alkylene group having 1 to 4 carbon atoms; and
wherein in the Formula (3), each of R"₁ to R"₄ is independently, hydrogen, an alkyl group having 1 to 4 carbon atoms or a halogen atom, and each of R"₅ and R"₆ is independently, a bond or an alkylene group having 1 to 4 carbon atoms, and
wherein the non-aqueous electrolyte solution includes a fluorine atom-containing cyclic carbonate.

Preferably, the diisocyanate compound is represented by Formula (1).

Preferably, the diisocyanate compound is selected from the group consisting of m-xylylene diisocyanate, tolylene diisocyanate and a mixture thereof.

Additionally, the present disclosure relates to a non-aqueous electrolyte solution containing the acid or moisture reducing agent of the present disclosure.

Preferably, the diisocyanate compound is included in an amount of 0.1 mass% or more and 1 mass% or less based on a total mass of the non-aqueous electrolyte solution.

Preferably, the non-aqueous electrolyte solution further includes a lithium salt and a linear carbonate.

Additionally, the present disclosure relates to a lithium secondary battery including a positive electrode, a negative electrode, and the non-aqueous electrolyte solution of the present disclosure between the positive electrode and the negative electrode.

Preferably, the positive electrode includes a nickel-cobalt-manganese (NCM), nickel-cobalt-aluminum (NCA) or nickel-cobalt-manganese-aluminum (NCMA) based material.

Preferably, the positive electrode includes 50 mass% or more of nickel.

Preferably, the negative electrode includes 30 mass% or more of silicon.

Additionally, the present disclosure relates to a method for reducing acid or moisture in a non-aqueous electrolyte solution, including: adding the diisocyanate compound represented by Formula (1), (2) or (3) to a non-aqueous electrolyte solution including a fluorine atom-containing cyclic carbonate.

Embodiments of the present disclosure are as below:

### (Embodiment 1)

An acid or moisture reducing agent for a non-aqueous electrolyte solution, including a diisocyanate compound represented by Formula (1), (2) or (3), wherein the non-aqueous electrolyte solution includes a fluorine atom-containing cyclic carbonate: 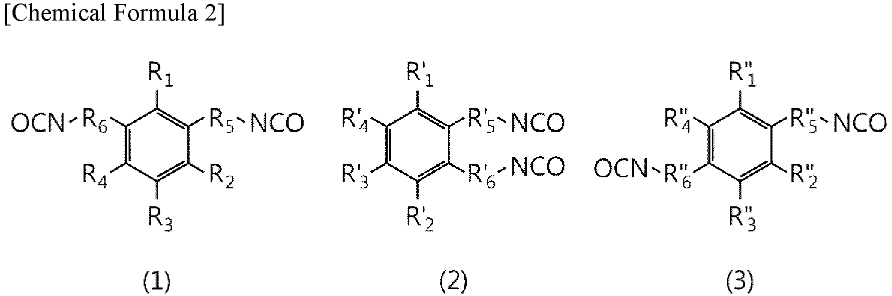
wherein in the Formula (1), each of R₁ to R₄ is independently, hydrogen, an alkyl group having 1 to 4 carbon atoms or a halogen atom, and each of R₅ and R₆ is independently, a bond or an alkylene group having 1 to 4 carbon atoms;
wherein in the Formula (2), each of R'₁ to R'₄ is independently, hydrogen, an alkyl group having 1 to 4 carbon atoms or a halogen atom, and each of R'₅ and R'₆ is independently, a bond or an alkylene group having 1 to 4 carbon atoms; and
wherein in the Formula (3), each of R"₁ to R"₄ is independently, hydrogen, an alkyl group having 1 to 4 carbon atoms or a halogen atom, and each of R"₅ and R"₆ is independently, a bond or an alkylene group having 1 to 4 carbon atoms.

### (Embodiment 2)

The acid or moisture reducing agent for the non-aqueous electrolyte solution defined in Embodiment 1, wherein the diisocyanate compound is represented by Formula (1).

### (Embodiment 3)

The acid or moisture reducing agent for the non-aqueous electrolyte solution defined in Embodiment 1 or 2, wherein the diisocyanate compound is selected from the group consisting of m-xylylene diisocyanate, tolylene diisocyanate and a mixture thereof.

### (Embodiment 4)

A non-aqueous electrolyte solution containing the acid or moisture reducing agent defined in any one of Embodiments 1 to 3.

### (Embodiment 5)

The non-aqueous electrolyte solution defined in Embodiment 4, wherein the diisocyanate compound is included in an amount of 0.1 mass% or more and 1 mass% or less based on a total mass of the non-aqueous electrolyte solution.

### (Embodiment 6)

The non-aqueous electrolyte solution defined in Embodiment 4 or 5, further including a lithium salt and a linear carbonate.

### (Embodiment 7)

A lithium secondary battery including a positive electrode, a negative electrode, and the non-aqueous electrolyte solution defined in any one of Embodiments 4 to 6 between the positive electrode and the negative electrode.

(Embodiment 8) The lithium secondary battery defined in Embodiment 7, wherein the positive electrode includes a nickel-cobalt-manganese (NCM), nickel-cobalt-aluminum (NCA) or nickel-cobalt-manganese-aluminum (NCMA) based material.

(Embodiment 9) The lithium secondary battery defined in Embodiment 7 or 8, wherein the positive electrode includes 50 mass% or more of nickel.

(Embodiment 10) The lithium secondary battery defined in any one of Embodiments 7 to 9, wherein the negative electrode includes 30 mass% or more of silicon.

(Embodiment 11) A method for reducing acid or moisture in a non-aqueous electrolyte solution, including: adding a diisocyanate compound represented by Formula (1), (2) or (3) to a non-aqueous electrolyte solution including a fluorine atom-containing cyclic carbonate: 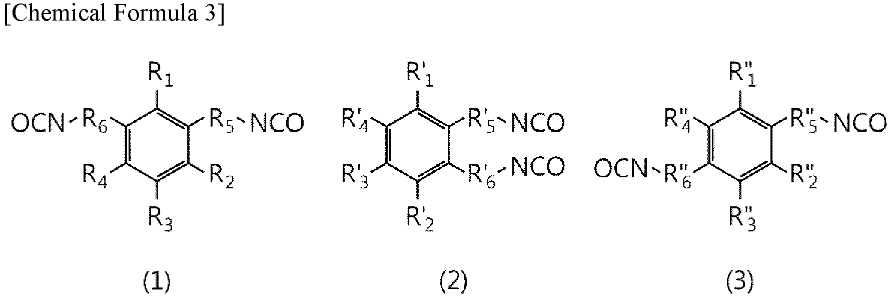
wherein in the Formula (1), each of R₁ to R₄ is independently, hydrogen, an alkyl group having 1 to 4 carbon atoms or a halogen atom, and each of R₅ and R₆ is independently, a bond or an alkylene group having 1 to 4 carbon atoms;
wherein in the Formula (2), each of R'₁ to R'₄ is independently, hydrogen, an alkyl group having 1 to 4 carbon atoms or a halogen atom, and each of R'₅ and R'₆ is independently, a bond or an alkylene group having 1 to 4 carbon atoms; and
wherein in the Formula (3), each of R"₁ to R"₄ is independently, hydrogen, an alkyl group having 1 to 4 carbon atoms or a halogen atom, and each of R"₅ and R"₆ is independently, a bond or an alkylene group having 1 to 4 carbon atoms.

(Embodiment 12) The method defined in Embodiment 11, wherein the diisocyanate compound is selected from the group consisting of m-xylylene diisocyanate, tolylene diisocyanate and a mixture thereof.

### Advantageous Effects

According to the present disclosure, in the lithium secondary battery using the non-aqueous electrolyte solution including the fluorine atom-containing cyclic carbonate, it may be possible to provide the non-aqueous electrolyte solution using the diisocyanate compound having the specific chemical structure as the acid or moisture reducing agent for the non-aqueous electrolyte solution to suppress the acid or moisture production reaction in the battery, thereby reducing gas generation in high temperature conditions and suppressing deterioration of battery characteristics.

### BRIEF DESCRIPTION OF THE DRAWINGS

FIG. 1 is a graph showing the remaining capacity and restored capacity measurement results after high temperature storage in Examples 1 and 2 and Comparative Example 1.
FIG. 2 is a graph showing the remaining capacity and restored capacity measurement results after high temperature storage in Comparative Examples 1 and 2.
FIG. 3 is a graph showing the remaining capacity and restored capacity measurement results after high temperature storage in Comparative Examples 1 and 3.
FIG. 4 is a graph showing the alternating current impedance measurement results in early days in Examples 1 and 2 and Comparative Example 1.
FIG. 5 is a graph showing the alternating current impedance measurement results after 2 weeks in Examples 1 and 2 and Comparative Example 1.
FIG. 6 is a graph showing the alternating current impedance measurement results after 4 weeks in Examples 1 and 2 and Comparative Example 1.
FIG. 7 is a graph showing the battery volume measurement results after high temperature storage in Examples 1 and 2 and Comparative Example 1.
FIG. 8 is a graph showing the battery volume measurement results after high temperature storage in Comparative Examples 1 and 2.
FIG. 9 is a graph showing the battery volume measurement results after high temperature storage in Comparative Examples 1 and 3.

### DETAILED DESCRIPTION

### [Acid or moisture reducing agent for non-aqueous electrolyte solution]

The acid or moisture reducing agent for the non-aqueous electrolyte solution of the present disclosure includes a diisocyanate compound represented by Formula (1), (2) or (3): 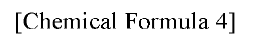 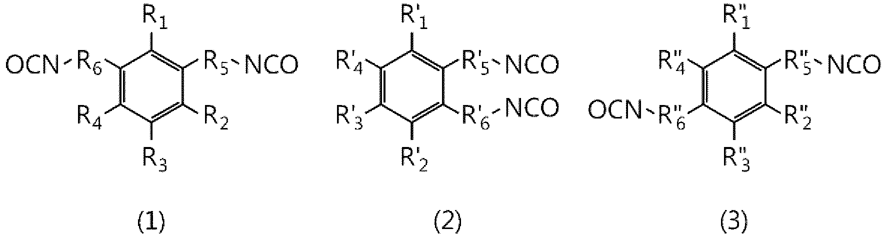
(in the above Formula (1), each of R₁ to R₄ is independently, hydrogen, an alkyl group having 1 to 4 carbon atoms, or a halogen atom, and each of R₅ and R₆ is independently, a bond or an alkylene group having 1 to 4 carbon atoms;
in the above Formula (2), each of R'₁ to R'₄ is independently, hydrogen, an alkyl group having 1 to 4 carbon atoms, or a halogen atom, and each of R'₅ and R'₆ is independently, a bond or an alkylene group having 1 to 4 carbon atoms; and
in the above Formula (3), each of R"₁ to R"₄ is independently, hydrogen, an alkyl group having 1 to 4 carbon atoms, or a halogen atom, and each of R"₅ and R"₆ is independently, a bond or an alkylene group having 1 to 4 carbon atoms).

In the specification, the 'alkyl group' refers to a straight-chain or branched-chain monovalent saturated hydrocarbon group unless otherwise defined herein.

In the specification, the 'alkylene group' refers to a straight-chain or branched-chain divalent saturated hydrocarbon group unless otherwise defined herein.

In the specification, the 'halogen atom' refers to a fluorine atom, a chlorine atom, a bromine atom, an iodine atom and an astatine atom unless otherwise defined herein. The halogen atom is preferably a fluorine atom, a chlorine atom, a bromine atom or an iodine atom.

In the above Formula (1), preferably, each of R₁ to R₄ is independently, hydrogen or an alkyl group having 1 to 4 carbon atoms, more preferably hydrogen, a methyl group or an ethyl group, and more preferably hydrogen or a methyl group. **In** the above Formula (1), preferably, each of R₅ and R₆ is independently, a bond, a methylene group or an ethylene group, and more preferably a bond or a methylene group.

**In** the above Formula (2), preferably, each of R'₁ to R'₄ is independently, hydrogen or an alkyl group having 1 to 4 carbon atoms, more preferably hydrogen, a methyl group or an ethyl group, and more preferably hydrogen or a methyl group. **In** the above Formula (2), preferably, each of R'₅ and R'₆ is independently, a bond, a methylene group or an ethylene group, and more preferably a bond or a methylene group.

**In** the above Formula (3), preferably, each of R"₁ to R"₄ is independently, hydrogen or an alkyl group having 1 to 4 carbon atoms, more preferably hydrogen, a methyl group or an ethyl group, and more preferably hydrogen or a methyl group. In the above Formula (3), preferably, each of R"₅ and R"₆ is independently, a bond, a methylene group or an ethylene group, and more preferably a bond or a methylene group.

In an embodiment, the diisocyanate compound included in the acid or moisture reducing agent for the non-aqueous electrolyte solution of the present disclosure is preferably represented by Formula (1). More preferably, the diisocyanate compound included in the acid or moisture reducing agent for the non-aqueous electrolyte solution of the present disclosure is represented by Formula (1), wherein each of R₁ to R₄ is independently, hydrogen or a methyl group, and each of R₅ and R₆ is independently, a bond or a methylene group. Using the diisocyanate compound having the above-described structure, it may be possible to suppress acid or moisture production reaction in the battery more effectively.

In an embodiment, more preferably, the diisocyanate compound included in the acid or moisture reducing agent for the non-aqueous electrolyte solution of the present disclosure is selected from the group consisting of m-xylylene diisocyanate, tolylene diisocyanate, and a mixture thereof. In particular, the diisocyanate compound included in the acid or moisture reducing agent for the non-aqueous electrolyte solution of the present disclosure is preferably m-xylylene diisocyanate or tolylene diisocyanate. When the diisocyanate compound having the above-described structure is used, it may be possible to suppress acid or moisture production reaction in the battery more effectively.

These diisocyanate compounds included in the acid or moisture reducing agent for the non-aqueous electrolyte solution of the present disclosure may be used singly or in combination.

### [Non-aqueous electrolyte solution]

The present disclosure also relates to a non-aqueous electrolyte solution containing the acid or moisture reducing agent of the present disclosure. The non-aqueous electrolyte solution of the present disclosure includes a fluorine atom-containing cyclic carbonate.

The fluorine atom-containing cyclic carbonate may include fluoro vinylene carbonate, (trifluoro methyl)vinylene carbonate, fluoro ethylene carbonate, 1,2-difluoro ethylene carbonate, 1,1-difluoro ethylene carbonate, 1,1,2-trifluoro ethylene carbonate, tetrafluoro ethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, (trifluoro methyl)ethylene carbonate, 4-fluoro-1,3-dioxolane-2-one, trans or cis 4,5-difluoro-1,3-dioxolane-2-one, 4-ethynyl-1,3-dioxolane-2-one and a combination thereof. More preferably, the fluorine atom-containing cyclic carbonate may be selected from fluoro ethylene carbonate, 1,2-difluoro ethylene carbonate, 1,1-difluoro ethylene carbonate, 1-fluoro-2-methylethylene carbonate, 1-fluoro-1-methylethylene carbonate or 1,2-difluoro-1-methylethylene carbonate, more preferably selected from fluoro ethylene carbonate, 1,2-difluoro ethylene carbonate or 1,1-difluoro ethylene carbonate, and in particular, preferably fluoro ethylene carbonate. By the use of the fluorine atom-containing cyclic carbonate, an SEI layer containing fluorine may be effectively formed on the negative electrode surface, thereby suppressing degradation in battery characteristics.

Conventionally, when the non-aqueous electrolyte solution includes the fluorine atom-containing cyclic carbonate, decomposition reaction of the fluorine atom-containing cyclic carbonate is a problematic issue. For example, it is thought that the fluorine atom-containing cyclic carbonate decomposes into cyclic carbonate (for example, VC) and acidic species (for example, hydrofluoric acid). As a result, gas is produced by oxidative decomposition of the cyclic carbonate at the positive electrode. Additionally, the acidic species causes the dissociation of metal ions of the positive electrode.

In contrast, the inventors surprisingly found that the use of an isocyanate compound having a specific chemical structure as an acid or moisture reducing agent for a non-aqueous electrolyte solution can effectively suppress the acid and/or moisture production reaction in the battery.

After high temperature storage, the non-aqueous electrolyte solution of the present disclosure preferably includes acidic species in an amount of 0.1 ppm or more 100 ppm or less, more preferably 60 ppm or less, more preferably 50 ppm or less, much more preferably 40 ppm or less, even more preferably 30 ppm or less, further much more preferably 20 ppm or less, and especially preferably 15 ppm or less. The amount of acidic species included in the nonaqueous electrolyte solution after high temperature storage is determined by neutralization titration after storage of the non-aqueous electrolyte solution at 60°C for 1 week.

The diisocyanate compound included in the non-aqueous electrolyte solution of the present disclosure is preferably included in an amount of 0.1 mass% or more and 1 mass% or less, more preferably 0.2 mass% or more and 0.9 mass% or less, and more preferably, 0.3 mass% or more and 0.7 mass% or less based on the total mass of the non-aqueous electrolyte solution. When the non-aqueous electrolyte solution contains the diisocyanate compound as the acid or moisture reducing agent in the aforementioned range of amounts, it may be possible to effectively suppress the acid or moisture production reaction in the battery.

The fluorine atom-containing cyclic carbonate included in the non-aqueous electrolyte solution of the present disclosure is preferably included in an amount of 5 vol% or more and 30 vol% or less, more preferably 8 vol% or more and 25 vol% or less, and more preferably 10 vol% or more and 20 vol% or less, based on the total volume of the non-aqueous electrolyte solution. When the non-aqueous electrolyte solution includes the fluorine atom-containing cyclic carbonate in the aforementioned range of amounts, the film forming capability on the negative electrode surface in the battery is higher.

Preferably, the non-aqueous electrolyte solution of the present disclosure further includes a linear carbonate. The linear carbonate may include dimethyl carbonate (DMC), ethyl methyl carbonate (EMC), methyl propyl carbonate (MPC), methyl isopropyl carbonate, methyl butyl carbonate, diethyl carbonate (DEC), ethyl propyl carbonate, ethyl butyl carbonate, dipropyl carbonate, propyl butyl carbonate and a combination thereof.

The non-aqueous electrolyte solution of the present disclosure may include a mixture of the cyclic carbonate and the linear carbonate, and a ratio of the cyclic carbonate to the linear carbonate is preferably a volume ratio of from 0.5:9.5 to 5:5, more preferably from 0.5:9.5 to 3:7, and more preferably from 1:9 to 2:8.

The non-aqueous electrolyte solution of the present disclosure may further include an organic solvent, for example, an ether compound, an ester compound or an amide compound.

The ether compound may include a cyclic ether or a linear ether. Examples of the cyclic ether may include tetrahydrofuran and 2-methyl tetrahydrofuran. Examples of the linear ether may include dimethyl ether, diethyl ether, dipropyl ether, methyl ethyl ether, methyl propyl ether and ethyl propyl ether.

The ester compound may include a carboxylic acid ester. Examples of the carboxylic acid ester may include methyl formate, ethyl formate, methyl acetate, ethyl acetate, propyl acetate, butyl acetate, methyl propionate, ethyl propionate, propyl propionate, methyl butyrate, ethyl butyrate, propyl butyrate, methyl valerate, ethyl valerate, propyl valerate, γ-butyrolactone, γ-valerolactone, γ-caprolactone, σ-valerolactone, ε-caprolactone, compounds with partial substitution of fluorine for hydrogen of carboxylic acid ester and a combination thereof.

Examples of the amide compound include dimethyl acetamide (DMA) and dimethyl formamide.

Besides, the non-aqueous electrolyte solution of the present disclosure may include, without limitation, any other solvent, for example, poly ether, a sulfur containing solvent and a phosphorus containing solvent without departing from the objective of the present disclosure.

The non-aqueous electrolyte solution of the present disclosure may include electrolytes commonly used in secondary batteries. The electrolyte acts as a medium that transports ions that take part in electrochemical reaction in the secondary battery. In particular, the present disclosure is useful for electrolyte solutions for lithium secondary batteries, and in this case, includes a lithium salt as the electrolyte.

The lithium salt included in the non-aqueous electrolyte solution of the present disclosure may include, for example, LiPF₆, LiBF₄, LiB₁₂F₁₂, LiAsF₆, LiFSO₃, Li₂SiF₆, LiCF₃CO₂, LiCH₃CO₂, LiCF₃SO₃, LiC₄F₉SO₃, LiCF₃CF₂SO₃, LiCF₃(CF₂)₇SO₃, LiCF₃CF₂(CF₃)₂CO, Li(CF₃SO₂)₂CH, LiNO₃, LiN(CN)₂, LiN(FSO₂)₂, LiN(F₂SO₂)₂, LiN(CF₃SO₂)₂, LiN(C₂F₅SO₂)₂, LiC(CF₃SO₂)₃, LiP(CF₃)₆, LiPF(CF₃)₅, LiPF₂(CF₃)₄, LiPF₃(CF₃)₃, LiPF₄(CF₃)₂, LiPF₄(C₂F₅)₂, LiPF₄(CF₃SO₂)₂, LiPF₄(C₂F₅SO₂)₂, LiBF₂C₂O₄, LiBC₄O₈, LiBF₂(CF₃)₂, LiBF₂(C₂F₅)₂, LiBF₂(CF₃SO₂)₂, LiBF₂(C₂F₅SO₂)₂, LiSbF₆, LiAlO₄, LiAlF₄, LiSCN, LiClO₄, LiCl, LiF, LiBr, LiI, LiAlCl₄, LiFSI, LiTFSI. In particular, the lithium salt preferably includes an inorganic salt such as LiPF₆, LiBF₄, LiAsF₆ and LiClO₄. In an embodiment, most preferably, the lithium salt included in the non-aqueous electrolyte solution of the present disclosure includes LiPF₆. These lithium salts may be used singly or in combination.

In an embodiment, the lithium salt included in the non-aqueous electrolyte solution of the present disclosure may include lithium bis(fluorosulfonyl)imide (LiFSI), lithium bis(trifluoromethanesulfonyl)imide (LiTFSI). In an embodiment, the lithium salt included in the non-aqueous electrolyte solution of the present disclosure may include LiFSI together with LiPF₆.

The amount of the electrolyte is not limited to a particular range, but the electrolyte is included in an amount of from 0.1 mol/L to 5 mol/L, preferably from 0.5 mol/L to 3 mol/L, and more preferably from 0.5 mol/L to 2 mol/L based on the total mass of the non-aqueous electrolyte solution. When the amount of the electrolyte is within the aforementioned range, sufficient battery characteristics may be obtained.

The non-aqueous electrolyte solution of the present disclosure may further include at least one type of additive. The additive may include, for example, a flame retardant, a wetting agent, a stabilizer, a corrosion inhibitor, a gelling agent, an overcharge inhibitor and a negative electrode film forming additive.

### [Lithium secondary battery]

The present disclosure also relates to a lithium secondary battery including a positive electrode, a negative electrode, and the non-aqueous electrolyte solution of the present disclosure between the positive electrode and the negative electrode.

The lithium secondary battery including the non-aqueous electrolyte solution of the present disclosure may include, without limitation, any type of positive and negative electrodes commonly used in lithium secondary batteries, and may include a container accommodating the positive electrode and the negative electrode together with the non-aqueous electrolyte solution of the present disclosure. Additionally, a separator may be interposed between the positive electrode and the negative electrode.

### < Positive electrode >

The positive electrode used in the lithium secondary battery of the present disclosure may be, for example, manufactured by coating a positive electrode slurry including a positive electrode active material, a binder, a conductive material and a solvent on a positive electrode current collector, followed by drying and rolling.

The positive electrode current collector is not limited to a particular type and may include those having conductive properties without causing any chemical change in the lithium secondary battery of the present disclosure, for example, stainless steel, aluminum, nickel, titanium, sintered carbon, or aluminum or stainless steel treated with carbon, nickel, titanium and silver on the surface.

The positive electrode active material is a compound capable of reversible intercalation and deintercalation of lithium, and specifically, may include lithium composite metal oxide containing lithium and at least one type of metal of cobalt, manganese, nickel or aluminum. More specifically, the lithium composite metal oxide may include lithium-manganese based oxide (for example, LiMnO₂, LiMn₂O₄), lithium-cobalt based oxide (for example, LiCoO₂), lithium-nickel based oxide (for example, LiNiO₂), lithium-nickel-manganese based oxide (for example, LiNi_{1-y1}Mn_{y1}O₂ (where 0 < y1 < 1), LiMn_{2-z1}Ni_{z1}O₄ (where 0 < Z1 < 2)), lithium-nickel-cobalt based oxide (for example, LiNi_{1-y2}Co_{y2}O₂ (where 0 < y2 < 1)), lithium-manganese-cobalt based oxide (for example, LiCo_{1-y3}Mn_{y3}O₂ (where 0 < y3 < 1), LiMn_{2-z2}Co_{z2}O₄ (where 0 < Z2 < 2)), lithium-nickel-manganese-cobalt based oxide (for example, Li(Niₚ₁Co_{q1}Mnᵣ₁)O₂ (where 0 < p1 < 1, 0 < q1 < 1, 0 < r1 < 1, p1+q1+r1=1), or Li(Niₚ₂Co_{q2}Mnᵣ₂)O₄ (where 0 < p2 < 2, 0 < q2 < 2, 0 < r2 < 2, p2+q2+r2=2), or lithium-nickel-cobalt-manganese-transition metal (M) oxide (for example, Li(Niₚ₃Co_{q3}Mnᵣ₃M_{S3})O₂ (where M is selected from the group consisting of Al, Fe, V, Cr, Ti, Ta, Mg and Mo, each of p3, q3, r3 and s3 is independently the atomic fraction of the elements, 0 < p3 < 1, 0 < q3 < 1, 0 < r3 < 1, 0 < s3 < 1, p3+q3+r3+s3=1)), used singly or in combination.

In the lithium secondary battery of the present disclosure, lithium composite metal oxide including metal containing nickel and lithium is preferred. In terms of capacity characteristics and stability of the battery, more preferably, the positive electrode includes nickel-cobalt-manganese (NCM), nickel-cobalt-aluminum (NCA) or nickel-cobalt-manganese-aluminum (NCMA) based materials.

The positive electrode used in the lithium secondary battery of the present disclosure preferably includes 50 mass% or more of nickel, more preferably 60 mass% or more of nickel, more preferably 75 mass% or more of nickel, much more preferably 80 mass% or more of nickel, and further much more preferably 85 mass% or more of nickel.

The positive electrode active material is preferably included in an amount of from 80 to 99 mass%, and more preferably from 90 to 98 mass% based on the total mass of solids in the positive electrode slurry. When the amount of the positive electrode active material is within the aforementioned range, it may be possible to achieve high energy density and capacity.

The binder is the component that helps to hold the positive electrode active material and the conductive material together and bind to the current collector, and is preferably included in an amount of from 1 to 30 mass% and more preferably from 1.5 mass% to 10 mass% based on the total mass of solids in the positive electrode slurry. Examples of the binder may include polyvinylidene fluoride (PVDF), polyvinyl alcohol (PVA), carboxymethyl cellulose (CMC), starch, hydroxypropyl cellulose, regenerated cellulose, polyvinyl pyrrolidone, poly(tetra fluoro ethylene), polyethylene, polypropylene, ethylene-propylene-diene terpolymer (EPDM), sulfonated EPDM, styrene-butadiene rubber and fluoro rubber.

The conductive material is the material that provides conductive properties without any chemical change in the lithium secondary battery of the present disclosure, and is preferably included in an amount of from 0.5 to 50 mass%, and more preferably from 1 to 20 mass% based on the total mass of solids in the positive electrode slurry. When the conductive material is included in the aforementioned range of amounts, it may be possible to improve electrical conductivity and achieve high energy density and capacity.

The conductive material may include, for example, carbon powder such as carbon black, acetylene black, Ketjen black, channel black, furnace black, lamp black, thermal black, single-walled carbon nanotubes (SWCNT) and multi-walled carbon nanotubes (MWCNT); graphite powder with developed crystal structure such as natural graphite, artificial graphite and graphite; conductive fibers such as carbon fibers and metal fibers; metal powder such as aluminum powder and nickel powder; conductive whiskers such as zinc oxide and potassium titanate; conductive metal oxide such as titanium oxide; and conductive materials such as polyphenylene derivatives.

The solvent may include, without limitation, any solvent that makes the positive electrode active material, the binder and the conductive material a slurry as the positive electrode material, and may include, for example, organic solvents such as N-methyl-2-pyrrolidone (NMP), dimethyl formamide (DMF), acetone, dimethylacetamide and water. Additionally, the solvent may be used in such an amount that the positive electrode slurry has optimum viscosity, and for example, in such an amount that the solid concentration in the slurry is from 10 mass% to 60 mass%, preferably from 20 mass% to 50 mass%.

### < Negative electrode >

The negative electrode used in the lithium secondary battery of the present disclosure may be, for example, manufactured by coating a negative electrode slurry including a negative electrode active material, a binder, a conductive material and a solvent on a negative electrode current collector, followed by drying and rolling.

The negative electrode current collector is generally 3 to 500 µm in thickness. The negative electrode current collector is not limited to a particular type and may include those having high conductivity without causing any chemical change in the lithium secondary battery of the present disclosure, for example, copper, stainless steel, aluminum, nickel, titanium, sintered carbon, copper or stainless steel treated with carbon, nickel, titanium and silver on the surface, and aluminum-cadmium alloys. Additionally, in the same way as the positive electrode current collector, the negative electrode current collector may have microtexture on the surface to increase the bonding strength of the negative electrode active material, and may come in various forms, for example, a film, a sheet, a foil, a mesh or a net, a porous body, a foam and a nonwoven.

The negative electrode active material may include at least one selected from the group consisting of lithium metals, carbon materials that can reversibly intercalate or deintercalate lithium ions, metals or alloys of these metals and lithium, metal composite oxide, materials capable of doping and dedoping lithium, and transition metal oxide.

The carbon materials that can reversibly intercalate or deintercalate lithium ions may include, without limitation, any carbon based negative electrode active material commonly used in lithium secondary batteries, for example, crystalline carbon, amorphous carbon or a combination thereof. Examples of the crystalline carbon may include graphite such as amorphous, platy, flaky, spherical or fibrous natural graphite and artificial graphite. Examples of the amorphous carbon may include soft carbon (low temperature sintered carbon) or hard carbon, mesophase pitch carbide and sintered cokes.

The metals or alloys of these metals and lithium may include metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of these metals and lithium.

The metal composite oxide may be selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1), and SnₓMe₁₋ₓMe'_{y}O_{z}(Me: Mn, Fe, Pb, Ge; Me': Al, B, P, Si, Groups 1, 2 and 3 elements in the periodic table, halogen; 0 < x≤1; 1≤y≤3; 1≤z≤8).

The materials capable of doping and dedoping lithium may include Si, SiOₓ (0 < x < 2), Si-Y alloys (where Y is an element selected from the group consisting of alkali metals, alkaline earth metals, Group 13 elements, Group 14 elements, transition metal, rare earth elements and a combination thereof, and is not Si), Sn, SnO₂, Sn-Y (where Y is an element selected from the group consisting of alkali metals, alkaline earth metals, Group 13 elements, Group 14 elements, transition metal, rare earth elements and a combination thereof, and is not Sn), and a mixture of at least one of them and SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po and a combination thereof.

The transition metal oxide may include lithium containing titanium composite oxide (LTO), vanadium oxide and lithium vanadium oxide.

The negative electrode active material of the lithium secondary battery of the present disclosure may preferably include silicon-containing materials, for example, Si, SiOₓ (0 < x < 2), Si-Y alloys (where Y is an element selected from the group consisting of alkali metals, alkaline earth metals, Group 13 elements, Group 14 elements, transition metal, rare earth elements and a combination thereof, and is not Si), and a mixture of at least one of them and SiO₂. In particular, more preferably, the negative electrode active material may include Si materials, for example, Si microparticles.

The negative electrode used in the lithium secondary battery of the present disclosure preferably includes 30 mass% or more of silicon, more preferably 50 mass% or more of silicon, more preferably 65 mass% or more of silicon, and even more preferably 80 mass% or more of silicon.

The negative electrode active material is preferably included in an amount of 80 to 99 mass% and more preferably from 90 to 99 mass% based on the total mass of solids in the negative electrode slurry.

The binder is the component that helps to hold the conductive material, the negative electrode active material and the current collector together, and is preferably included in an amount of from 1 to 30 mass%, and more preferably from 1 to 10 mass% based on the total mass of solids in the negative electrode slurry. Examples of the binder include polyvinylidene fluoride (PVDF), polyvinyl alcohol (PVA), carboxymethyl cellulose (CMC), starch, hydroxypropyl cellulose, regenerated cellulose, polyvinyl pyrrolidone, poly(tetra fluoro ethylene), polyethylene, polypropylene, ethylene-propylene-diene polymer (EPDM), sulfonated EPDM, styrene-butadiene rubber (SBR) and fluorine rubber. These binders may be used singly or in combination.

The conductive material is the components for improving the conductivity of the negative electrode active material, and is preferably included in an amount of from 1 to 20 mass% based on the total mass of solids in the negative electrode slurry. The conductive material is not limited to a particular type and may include those having conductive properties without causing any chemical change in the lithium secondary battery, for example, graphite such as natural graphite and artificial graphite; carbon black such as acetylene black, Ketjen black, channel black, furnace black, lamp black and thermal black; conductive fibers such as carbon fibers and metal fibers; metal powder such as aluminum powder and nickel powder; conductive whiskers such as zinc oxide and potassium titanate; conductive metal oxide such as titanium oxide; and conductive materials such as polyphenylene derivatives.

The solvent may include, without limitation, any solvent that makes the negative electrode active material, the binder and the conductive material a slurry as the negative electrode material, and may include, for example, organic solvents such as water, NMP and alcohol. Additionally, the solvent may be used in such an amount that the negative electrode slurry has optimum viscosity, and for example, in such an amount that the solid concentration in the slurry is from 50 mass% to 75 mass%, preferably from 50 mass% to 65 mass%.

The separator of the lithium secondary battery of the present disclosure is responsible for preventing internal short-circuits of two electrodes and electrolyte wetting, and a polymer resin, fillers and a solvent may be mixed to prepare a separator composition, and the separator composition may be directly coated on the electrode and dried to form a separator film, and the separator composition may be cast on a support and dried, a separator film may be peeled off from the support and laminated on the electrode.

The separator may include porous polymer films commonly used as separators, for example, porous polymer films made of polyolefin-based polymer such as ethylene homopolymer, propylene homopolymer, ethylene/butene copolymer, ethylene/hexene copolymer and ethylene/methacrylate copolymer, used singly or in stack, or commonly used porous nonwoven fabrics, for example, nonwoven fabrics made of high melting point glass fibers and polyethylene terephthalate fibers, but is not limited thereto.

The porous separator may generally have the pore size of from 0.01 to 50 µm and porosity of from 5 to 95%. Additionally, the thickness of the porous separator may generally range from 5 to 300 µm.

The lithium secondary battery of the present disclosure is not limited to a particular shape, and may be cylindrical, prismatic, laminate type, pouch type, or coin type in shape.

### [Method for reducing acid or moisture in non-aqueous electrolyte solution]

The present disclosure also relates to a method for reducing acid or moisture in a non-aqueous electrolyte solution, including adding a diisocyanate compound represented by Formula (1), (2) or (3) to the non-aqueous electrolyte solution including a fluorine atom-containing cyclic carbonate: 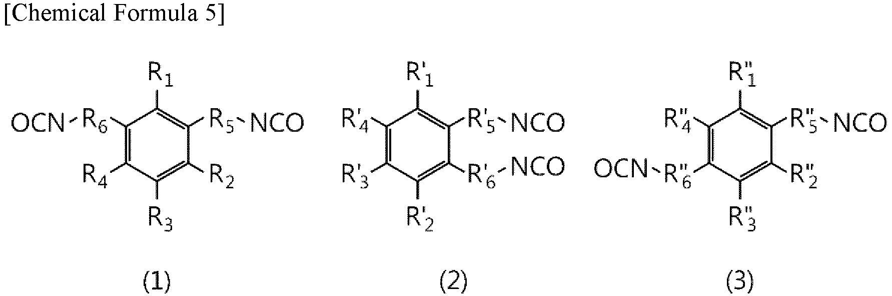
(in the above Formula (1), each of R₁ to R₄ is independently, hydrogen, an alkyl group having 1 to 4 carbon atoms, or a halogen atom, and each of R₅ and R₆ is independently, a bond or an alkylene group having 1 to 4 carbon atoms;
in the above Formula (2), each of R'₁ to R'₄ is independently, hydrogen, an alkyl group having 1 to 4 carbon atoms, or a halogen atom, and each of R'₅ and R'₆ is independently, a bond or an alkylene group having 1 to 4 carbon atoms; and
in the above Formula (3), each of R"₁ to R"₄ is independently, hydrogen, an alkyl group having 1 to 4 carbon atoms, or a halogen atom, and each of R"₅ and R"₆ is independently, a bond or an alkylene group having 1 to 4 carbon atoms). The diisocyanate compound represented by Formula (1), (2) or (3) may include the above-described compound.

**In** the method for reducing acid or moisture in the non-aqueous electrolyte solution of the present disclosure, the diisocyanate compound is preferably a compound represented by Formula (1), and more preferably, a compound represented by Formula (1) wherein each of R₁ to R₄ is independently hydrogen or a methyl group, and each of R₅ and R₆ is independently a bond or a methylene group, and in particular, preferably m-xylylene diisocyanate or tolylene diisocyanate. When the diisocyanate compound having the above-described structure is selected, it may be possible to suppress acid or moisture production reaction in the battery more effectively.

### 〈〈EXAMPLE〉〉

Hereinafter, the present disclosure will be described in more detail using Example and Comparative Example. However, the scope of the present disclosure is not limited to the Example.

### (Example 1)

### (1) Manufacture of lithium secondary battery

### < Manufacture of positive electrode >

96.5 parts by mass of nickel-cobalt-manganese-aluminum based oxide (NCMA, nickel content 85%) as a positive electrode active material, 1.5 parts by mass of acetylene black as a conductive material and 2 parts by mass of polyvinylidene fluoride as a binder were dispersed in N-methyl-2-pyrrolidone as a solvent to prepare a positive electrode slurry. The positive electrode slurry was uniformly coated on an aluminum foil, dried by heat and vacuum and pressed to manufacture a positive electrode.

### < Manufacture of negative electrode >

80 parts by mass of Si microparticles as a negative electrode active material, 10 parts by mass of graphite as a conductive material, and 10 parts by mass of styrene butadiene rubber and carboxymethyl cellulose as a binder were dispersed in water as a solvent to prepare a negative electrode slurry. The negative electrode slurry was uniformly coated on a copper foil, dried by heat and vacuum and pressed to manufacture a negative electrode.

### < Manufacture of non-aqueous electrolyte solution >

A mixture of 10 parts by volume of fluoro ethylene carbonate (FEC) and 90 parts by volume of diethyl carbonate (DEC) was used as a solvent, and 1.2 M of LiPF₆ as an electrolyte was dissolved in the solvent to prepare a solution. 0.5 parts by mass of m-xylylene diisocyanate (available from Mitsui Chemicals) represented by the following Formula (A) as an acid or moisture reducing agent was added to 100 parts by mass of the obtained solution to obtain the non-aqueous electrolyte solution of the present disclosure.

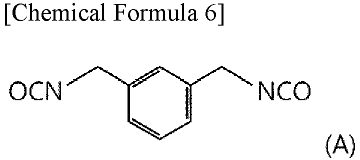

### < Manufacture of lithium secondary battery >

A pouch type battery having opposing area of 12 cm² was manufactured using the positive electrode, the negative electrode and the non-aqueous electrolyte solution prepared by the above-described method, and a polyolefin film as a separator.

### (Example 2)

A non-aqueous electrolyte solution and a lithium secondary battery including the same were manufactured by the same method as Example 1, except that tolylene diisocyanate (a mixture of 80% of 2, 4-isomer and 20% of 2, 6-isomer, available from Mitsui Chemicals) represented by the following Formula (B) was added to the non-aqueous electrolyte solution instead of m-xylylene diisocyanate.

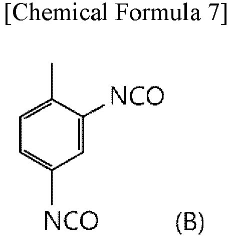

### (Comparative Example 1)

A non-aqueous electrolyte solution and a lithium secondary battery including the same were manufactured by the same method as Example 1, except that m-xylylene diisocyanate was not added to the non-aqueous electrolyte solution.

(Comparative Example 2) A non-aqueous electrolyte solution and a lithium secondary battery including the same were manufactured by the same method as Example 1, except that 1,6-diisocyanate hexane (available from Mitsui Chemicals) represented by the following Formula (C) was added to the non-aqueous electrolyte solution instead of m-xylylene diisocyanate.

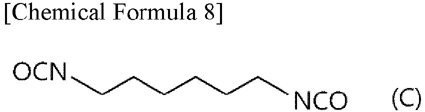

### (Comparative Example 3)

A non-aqueous electrolyte solution and a lithium secondary battery including the same were manufactured by the same method as Example 1, except that 1,3-bis(isocyanate methyl)cyclohexane (available from Mitsui Chemicals) represented by the following Formula (D) was added to the non-aqueous electrolyte solution instead of m-xylylene diisocyanate.

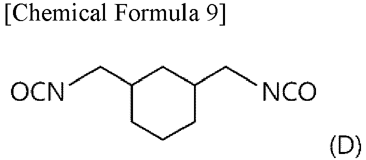

### (2) Measurement of acidic species

Each of the non-aqueous electrolyte solution of Examples 1 and 2 and Comparative Example 1 prepared in (1) was filled in an aluminum bottle, and stored at 60°C for 1 week. The amount of acidic species (HF) in the electrolyte solution after the storage was measured by neutralization titration. The results are shown in TABLE 1 below.

**[TABLE 1]**

| Acidic species measurement results | | |
|---|---|---|
| | Acid or moisture reducing agent | Acidic species (ppm) |
| Example 1 | m-xylylene diisocyanate | 11 |
| Example 2 | tolylene diisocyanate | 48 |
| Comparative Example 1 | none | 119 |

As can be seen from the results of TABLE 1, in the non-aqueous electrolyte solution including m-xylylene diisocyanate or the non-aqueous electrolyte solution including tolylene diisocyanate, the amount of acidic species after high temperature storage was reduced. Accordingly, it was confirmed that degradation of the electrolyte solution itself was suppressed by using the acid or moisture reducing agent of the present disclosure.

### (3) 60°C storage test (remaining·restored capacity measurement, alternating current impedance measurement, battery volume measurement)

For each lithium secondary battery prepared in (1), the lithium secondary battery in charged state was left untouched at 60°C for 1 week or 2 weeks. After 60°C storage, the remaining capacity was measured at 25°C with the lower limit of discharge voltage of 2.50V, and after recharging (the upper limit of charge voltage 4.20V), the restored capacity was measured. Subsequently, the battery voltage was stabilized to 3.6V corresponding to SOC 50%, alternating current impedance was measured at amplitude voltage of 5 mV, and battery volume was measured by the Archimedes method.

### < Remaining·restored capacity measurement >

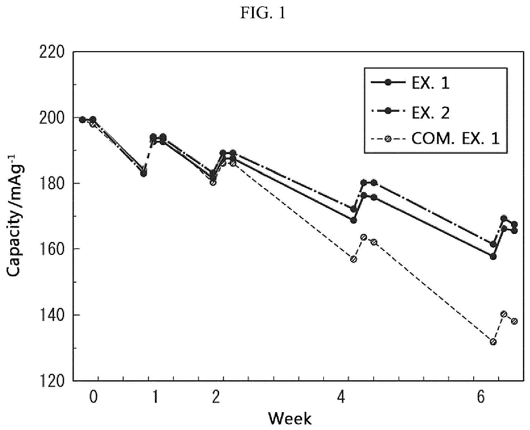

FIG. 1 shows the remaining capacity and restored capacity measurement results by the above-described manipulation method using the lithium secondary batteries of Examples 1 and 2 and Comparative Example 1 prepared in (1).

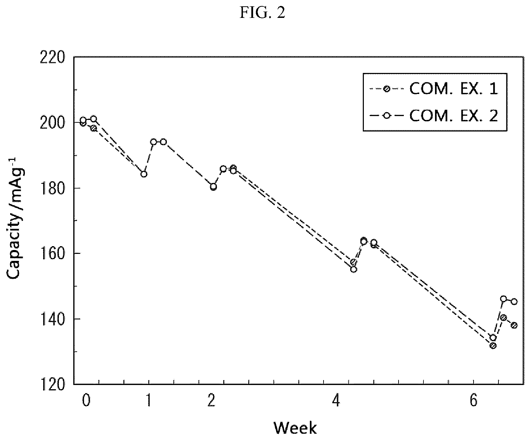

FIG. 2 shows the remaining capacity and restored capacity measurement results by the above-described manipulation method using the lithium secondary batteries of Comparative Examples 1 and 2 prepared in (1).

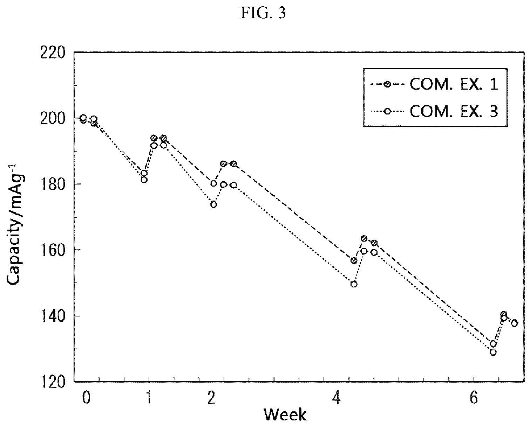

FIG. 3 shows the remaining capacity and restored capacity measurement results by the above-described manipulation method using the lithium secondary batteries of Comparative Examples 1 and 3 prepared in (1).

As can be seen from the results of FIG. 1, it was confirmed that in the lithium secondary battery of Example 1 using the non-aqueous electrolyte solution including m-xylylene diisocyanate or the lithium secondary battery of Example 2 using the non-aqueous electrolyte solution including tolylene diisocyanate, the remaining capacity and the restored capacity after 4 weeks were higher than the lithium secondary battery of Comparative Example 1, and the remaining capacity and the restored capacity after 6 weeks were much higher than the lithium secondary battery of Comparative Example 1. Accordingly, it was confirmed that in in the lithium secondary batteries using the non-aqueous electrolyte solutions of Examples 1 and 2, degradation in battery characteristics after high temperature storage was effectively suppressed.

In contrast, as can be seen from the results of FIGs. 2 and 3, it was confirmed that in the lithium secondary battery of Comparative Example 2 using the non-aqueous electrolyte solution including 1,6-diisocyanate hexane or the lithium secondary battery of Comparative Example 3 using the non-aqueous electrolyte solution including 1,3-bis(isocyanate methyl)cyclohexane, there was no big difference in remaining capacity and restored capacity after 4 to 6 weeks when compared with the lithium secondary battery of Comparative Example 1, showing that degradation in battery characteristics after high temperature storage could not be adequately suppressed.

### < Alternating current impedance measurement >

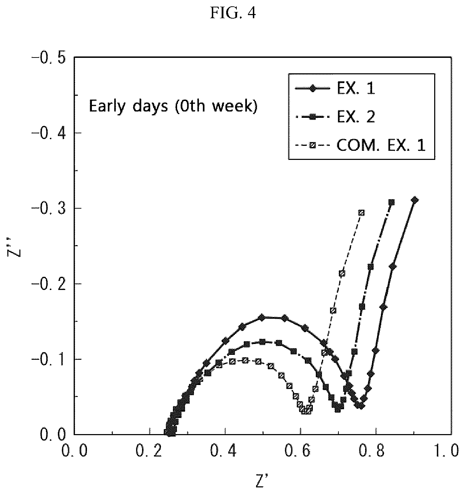

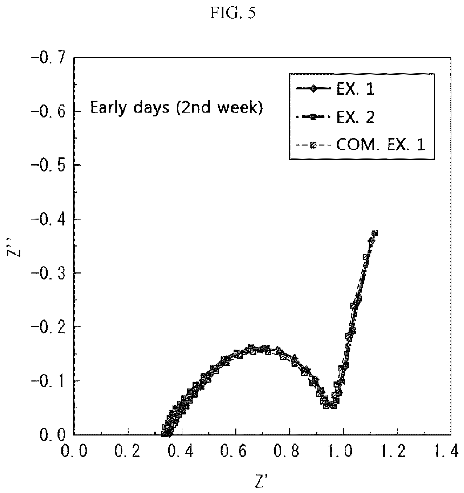

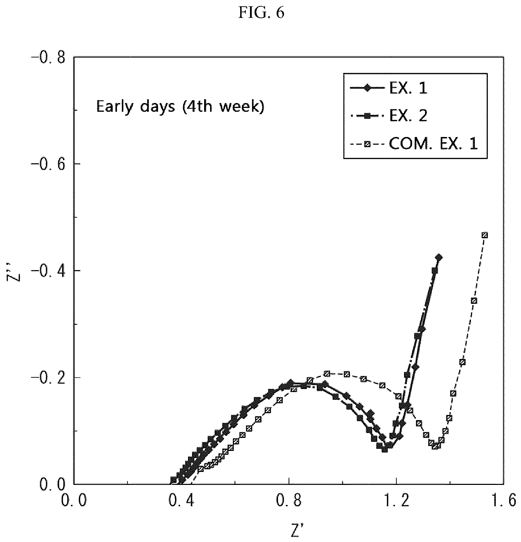

When alternating current impedance was measured by the above-described manipulation method using the lithium secondary batteries of Examples 1 and 2 and Comparative Example 1 prepared in (1), FIG. 4 shows the results in early days (0th week), FIG. 5 shows the results after left untouched for 2 weeks, and FIG. 6 shows the results after left untouched for 4 weeks. In the obtained graph, a large arc indicates high battery resistance.

From the results of FIG. 4, it was confirmed that in early days (0th week), the lithium secondary batteries of Examples 1 and 2 using the acid or moisture reducing agent of the present disclosure exhibited the large arc on the obtained graph when compared with the battery of Comparative Example 1 without the acid or moisture reducing agent, showing that the battery resistance was high. This is because when compounds including an isocyanate group are added to non-aqueous electrolyte solutions, in general, resistance increases. However, as can be seen from the results of FIG. 5, after the batteries were left untouched for 2 weeks in a high temperature (60°C) environment, there was no or little difference in arc size on the obtained graph between Examples 1 and 2 and Comparative Example 1, showing the battery resistance was at the same level. Additionally, as can be seen from the results of FIG. 6, after left untouched for 4 weeks in a high temperature (60°C) environment, the batteries of Examples 1 and 2 exhibited the smaller arc size on the obtained graph than Comparative Example 1. Accordingly, it was confirmed that the use of the acid or moisture reducing agent of the present disclosure could effectively suppress the rise in internal resistance when stored for a long term in a high temperature environment.

### < Battery volume measurement >

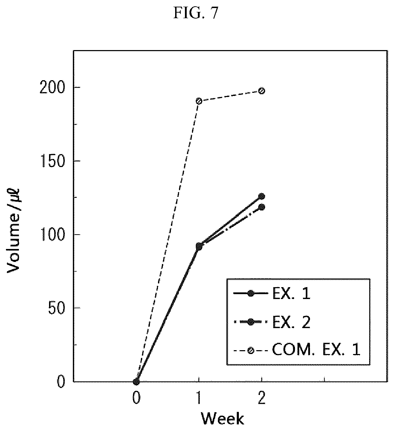

FIG. 7 shows the battery volume measurement results by the above-described manipulation method using the lithium secondary batteries of Examples 1 and 2 and Comparative Example 1 prepared in (1).

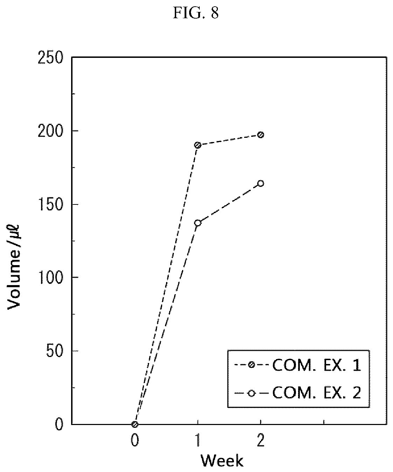

FIG. 8 shows the battery volume measurement results by the above-described manipulation method using the lithium secondary batteries of Comparative Example 1 and Comparative Example 2 prepared in (1).

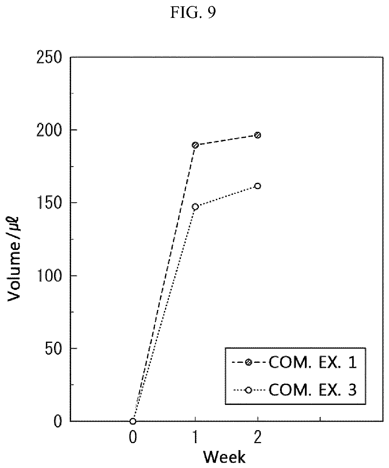

FIG. 9 shows the battery volume measurement results by the above-described manipulation method using the lithium secondary batteries of Comparative Example 1 and Comparative Example 3 prepared in (1).

As can be seen from the results of FIG. 7, it was confirmed that in the lithium secondary battery of Example 1 using the non-aqueous electrolyte solution including m-xylylene diisocyanate or the lithium secondary battery of Example 2 using the non-aqueous electrolyte solution including tolylene diisocyanate, the increase in the battery volume after high temperature storage was suppressed, showing that gas generation in the battery was notably suppressed.

In contrast, as can be seen from the results of FIGs. 8 and 9, it was confirmed that in the lithium secondary battery of Comparative Example 2 using the non-aqueous electrolyte solution including 1,6-diisocyanate hexane or the lithium secondary battery of Comparative Example 3 using the non-aqueous electrolyte solution including 1,3-bis(isocyanate methyl)cyclohexane, there was no big difference in increase in battery volume after high temperature storage when compared with the lithium secondary battery of Comparative Example 1, showing that gas generation after high temperature storage was not adequately suppressed.

## Claims

1. An acid or moisture reducing agent for a non-aqueous electrolyte solution, comprising:
a diisocyanate compound represented by Formula (1), (2) or (3),
wherein the non-aqueous electrolyte solution includes a fluorine atom-containing cyclic carbonate: 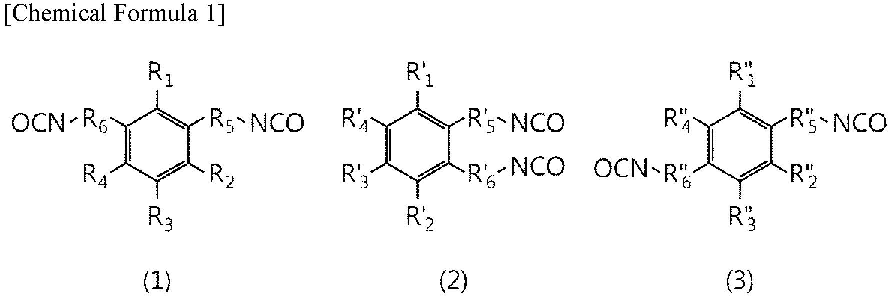
wherein in the Formula (1), each of R₁ to R₄ is independently, hydrogen, an alkyl group having 1 to 4 carbon atoms or a halogen atom, and each of R₅ and R₆ is independently, a bond or an alkylene group having 1 to 4 carbon atoms;
wherein in the Formula (2), each of R'₁ to R'₄ is independently, hydrogen, an alkyl group having 1 to 4 carbon atoms or a halogen atom, and each of R'₅ and R'₆ is independently, a bond or an alkylene group having 1 to 4 carbon atoms; and
wherein in the Formula (3), each of R"₁ to R"₄ is independently, hydrogen, an alkyl group having 1 to 4 carbon atoms or a halogen atom, and each of R"₅ and R"₆ is independently, a bond or an alkylene group having 1 to 4 carbon atoms.

2. The acid or moisture reducing agent of the non-aqueous electrolyte solution according to claim 1, wherein the diisocyanate compound is represented by Formula (1).

3. The acid or moisture reducing agent of the non-aqueous electrolyte solution according to claim 1, wherein the diisocyanate compound is selected from the group consisting of m-xylylene diisocyanate, tolylene diisocyanate and a mixture thereof.

4. A non-aqueous electrolyte solution comprising the acid or moisture reducing agent defined in any one of claims 1 to 3.

5. The non-aqueous electrolyte solution according to claim 4, wherein the diisocyanate compound is included in an amount of 0.1 mass% or more and 1 mass% or less based on a total mass of the non-aqueous electrolyte solution.

6. The non-aqueous electrolyte solution according to claim 4, further comprising:
a lithium salt and a linear carbonate.

7. A lithium secondary battery comprising:
a positive electrode,
a negative electrode, and
the non-aqueous electrolyte solution defined in claim 4 between the positive electrode and the negative electrode.

8. The lithium secondary battery according to claim 7, wherein the positive electrode includes a nickel-cobalt-manganese (NCM), nickel-cobalt-aluminum (NCA) or nickel-cobalt-manganese-aluminum (NCMA) based material.

9. The lithium secondary battery according to claim 7, wherein the positive electrode includes 50 mass% or more of nickel.

10. The lithium secondary battery according to claim 7, wherein the negative electrode includes 30 mass% or more of silicon.

11. A method for reducing acid or moisture in a non-aqueous electrolyte solution, comprising:
adding a diisocyanate compound represented by Formula (1), (2) or (3) to a non-aqueous electrolyte solution including a fluorine atom-containing cyclic carbonate: 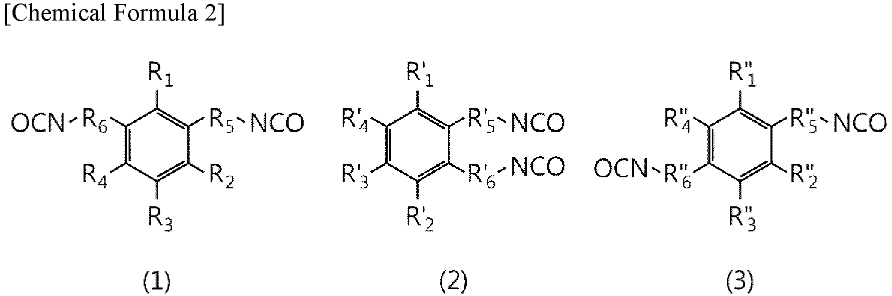
wherein in the Formula (1), each of R₁ to R₄ is independently, hydrogen, an alkyl group having 1 to 4 carbon atoms or a halogen atom, and each of R₅ and R₆ is independently, a bond or an alkylene group having 1 to 4 carbon atoms;
wherein in the Formula (2), each of R'₁ to R'₄ is independently, hydrogen, an alkyl group having 1 to 4 carbon atoms or a halogen atom, and each of R'₅ and R'₆ is independently, a bond or an alkylene group having 1 to 4 carbon atoms; and
wherein in the Formula (3), each of R"₁ to R"₄ is independently, hydrogen, an alkyl group having 1 to 4 carbon atoms or a halogen atom, and each of R"₅ and R"₆ is independently, a bond or an alkylene group having 1 to 4 carbon atoms.

12. The method according to claim 11, wherein the diisocyanate compound is selected from the group consisting of m-xylylene diisocyanate, tolylene diisocyanate and a mixture thereof.
